# EUROPEAN PATENT APPLICATION

(11) **EP 4 570 428 A1**
(43) Date of publication of application: **18.06.2025**
(21) Application number: 24215622.2
(22) Date of filing: 27.11.2024
(51) Int. Cl.: B23Q 11/10

(54) **MACHINE TOOL AND TANK**

(30) Priority: 11.12.2023 JP 2023208569
(71) Applicant: DMG Mori Co., Ltd., Yamatokoriyama-shi, Nara 639-1160 (JP)
(72) Inventor: KITADE, Yuhei, Yamatokoriyama-shi, Nara, 639-1160 (JP); FUNAKOSHI, Genki, Yamatokoriyama-shi, Nara, 639-1160 (JP)
(74) Representative: Isarpatent

(57) **Abstract**

Provided is a technique to deal with bubble-like coolant generated at various locations. A machine tool capable of machining a workpiece includes: a first tank for storing coolant used in machining the workpiece; a pump for pumping up the coolant stored in the first tank; a second tank for storing the coolant pumped up by the pump; and a controller for controlling the pump to send bubbles generated inside the first tank together with the coolant, to the second tank.

## Description

### TECHNICAL FIELD

The present disclosure relates to a machine tool and a tank.

### BACKGROUND ART

JP 2005-177900A discloses a machine tool equipped with a chip conveyor. The chip conveyor is a conveying mechanism for discharging workpiece chips generated during machining to the outside of the machine tool. The chips are swept by coolant from the machining area to the chip conveyor.

A filtration drum is provided inside the chip conveyor disclosed in JP 2005-177900A. The filtration drum is configured to remove workpiece chips from coolant flowing from the outside to the inside of the filtration drum.

In addition, a plurality of coolant jetting mechanisms are provided inside the filtration drum. Each jetting mechanism jets cleaning coolant from the inside of the filtration drum toward the filter on the outer circumferential surface to fly away chips clogged in the filter. This backwashes the filtration drum and prevents the filter drum from becoming clogged with chips. In the filtration drum disclosed in JP 2005-177900A, bubbling that occurs during backwashing is suppressed by jetting streams of coolant from the respective jetting mechanisms without causing them to interfere with each other.

JP 2005-177900A is an example of related art.

### SUMMARY OF THE INVENTION

When coolant bubbles, it may leak outside the machine tool. Such bubbling of coolant can occur at various locations, not only during backwashing of the filtration drum. When coolant bubbling occurs at various locations, it is difficult to suppress the bubbling itself. Therefore, there is a demand for a technique to deal with bubble-like coolant generated at various locations.

An example of the present disclosure provides a machine tool capable of machining a workpiece. The above-mentioned machine tool includes: a first tank for storing coolant used in machining the workpiece; a pump for pumping up the coolant stored in the first tank; a second tank for storing the coolant pumped up by the pump; and a controller for controlling the pump to send bubbles generated inside the first tank together with the coolant, to the second tank. The process is executed.

In an example of the present disclosure, the machine tool further includes a filtration mechanism that is provided inside the first tank and used for removing foreign matter contained in the coolant.

In an example of the present disclosure, the filtration mechanism is a drum filter configured to remove the foreign matter from coolant flowing in from the outside to the inside.

In an example of the present disclosure, the performing control includes controlling the pump such that a liquid surface of liquid coolant stored in the first tank passes through a suction port of the pump.

In an example of the present disclosure, the machine tool further includes a sensor for detecting a height of a top surface of bubble-like coolant stored in the second tank. The controller executes predetermined abnormality handling processing based on the fact that the height of the top surface of the bubble-like coolant has reached a predetermined threshold value.

In an example of the present disclosure, the machine tool further includes a float-type pump configured to float on liquid coolant stored in the second tank.

Another example of the present disclosure provides a tank capable of storing coolant used in machining a workpiece using a machine tool. The machine tool includes a pump for pumping up the coolant stored in the tank, and another tank for storing the coolant pumped up by the pump. The pump is controlled to send bubbles generated inside the tank together with the coolant, from the tank to the other tank.

Another example of the present disclosure provides a tank for use in a machine tool. The machine tool includes another tank for storing coolant used in machining a workpiece, and a pump for sending the coolant stored in the other tank to the tank. The pump is controlled to send bubbles generated inside the other tank together with the coolant, to the tank.

The above-described object, other objects, features, aspects, and advantages of the present invention will be clarified by the following detailed description of the present invention to be understood in connection with the attached drawings.

### BRIEF DESCRIPTION OF THE DRAWINGS

FIG. 1 is a diagram showing an appearance of a machine tool.
FIG. 2 is a conceptual diagram schematically showing a bubble-like coolant collecting mechanism.
FIG. 3 is a diagram showing an appearance of a chip conveyor.
FIG. 4 is a diagram showing a cross section of the chip conveyor.
FIG. 5 is a diagram showing an example of a coolant circulation mechanism.
FIG. 6 is a diagram illustrating an ON/OFF control mode.
FIG. 7 is a diagram illustrating a float pump.
FIG. 8 is a diagram showing a configuration example of a drive mechanisms in the machine tool.
FIG. 9 is a diagram showing an example of the hardware configuration of a controller.
FIG. 10 is a flowchart showing the flow of ON/OFF control.
FIG. 11 is a flowchart showing the flow of abnormality monitoring processing.

### EMBODIMENTS OF THE INVENTION

The following describes an embodiment according to the present invention with reference to the drawings. In the following description, the same components and the same constitutional elements are denoted by the same reference numeral. Those components and constitutional elements have the same name and the same function. Accordingly, detailed descriptions of those components and constitutional elements are not repeated. The following embodiments and modifications can be selectively combined as appropriate.

### A. Appearance of Machine Tool 100

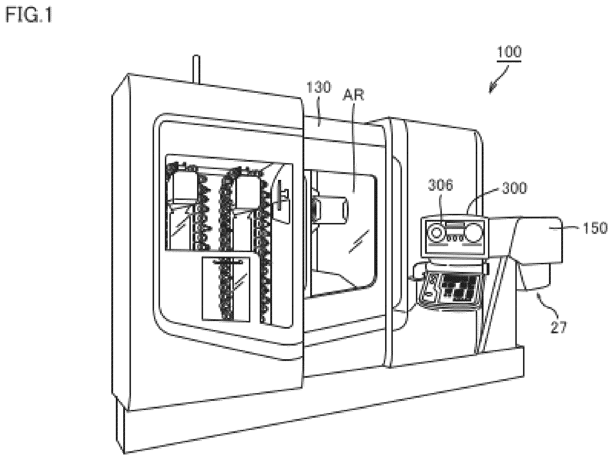

First, a machine tool 100 according to an embodiment will be described with reference to FIG. 1. FIG. 1 is a diagram showing an appearance of the machine tool 100.

The term "machine tool" as used in the present specification is a concept that encompasses various apparatuses having functions of machining workpieces. The machine tool 100 may be a horizontal machining center or a vertical machining center. Alternatively, the machine tool 100 may be a lathe, or any other cutting machine, griding machine, complex processing machine, five-axis processing machine, or the like. Furthermore, the machine tool 100 is not limited to those that perform only subtractive manufacturing, but may also perform additive manufacturing in addition to subtractive manufacturing.

The machine tool 100 includes, for example, a cover body 130, a chip conveyor 150, and an operation panel 300. The cover body 130, also called a splash guard, forms the appearance of the machine tool 100, and also defines a machining area AR for workpieces.

The machine tool 100 machines a workpiece while ejecting coolant into the machining area AR. The coolant used for machining is caused to flow together with workpiece chips from the machining area AR to the chip conveyor 150. The chip conveyor 150 separates the workpiece chips from the coolant and discharges the chips through a discharge port 27 to the outside of the machine tool 100. The coolant from which the workpiece chips are removed is reused for machining workpieces. Details of the chip conveyor 150 will be described later.

The operation panel 300 is a general-purpose computer and has a display 306 for displaying various types of information related to machining. The display 306 is, for example, a liquid crystal display, an organic electroluminescence (EL) display, or any other display device. The display 306 also has a touch screen to accept various operations on the machine tool 100 input through touch operation.

### B. Bubble-like Coolant Collecting Mechanism

The machine tool 100 machines workpieces while ejecting coolant into the machining area AR. At this time, the coolant bubbles due to various factors. As an example, coolant bubbles when being ejected onto walls or workpieces, or bubbles in the process of flowing inside the machine. Such bubbling of coolant can occur at various locations. Therefore, the machine tool 100 according to the embodiment has a mechanism to collect the bubble-like coolant in one place.

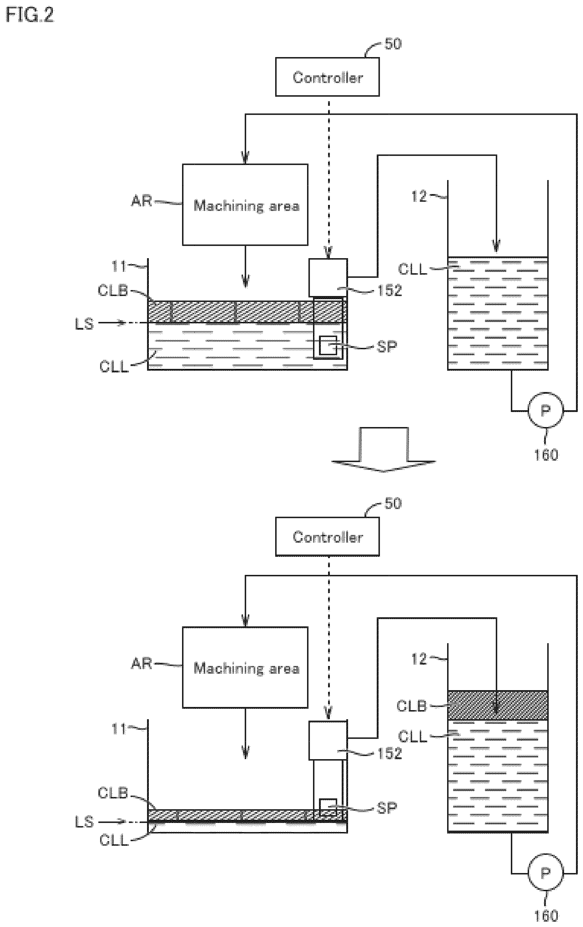

FIG. 2 is a conceptual diagram schematically showing the bubble-like coolant collecting mechanism. As shown in FIG. 2, the machine tool 100 includes the above-described machining area AR, a tank 11 (first tank), a tank 12 (second tank), a controller 50, and pumps 152 and 160.

The tank 11 is configured to store coolant used in machining a workpiece. Since the coolant bubbles during machining of the workpiece, the tank 11 stores not only liquid coolant CLL but also bubble-like coolant CLB.

The pump 152 is provided inside the tank 11 and is configured to pump up the coolant stored in the tank 11. The coolant pumped up by the pump 152 is sent to the tank 12. The tank 12 is configured to store the coolant sent from the tank 11.

The controller 50 is a device for controlling the machine tool 100. The controller 50 controls the pump 152 to send the bubble-like coolant CLB generated inside the tank 11, to the tank 12. This causes the bubble-like coolant CLB to be collected in the tank 12. Thus, the operator only needs to deal with the bubble-like coolant CLB in the tank 12 to prevent the bubble-like coolant from leaking outside the machine tool 100. The operator can make the bubble-like coolant CLB disappear, for example, by feeding a defoaming agent into the tank 12.

Preferably, the machine tool 100 controls the pump 152 such that a liquid surface LS of the liquid coolant CLL stored in the tank 11 passes through a suction port SP of the pump 152. The liquid surface LS corresponds to the boundary surface between the liquid coolant CLL and the bubble-like coolant CLB.

The controller 50 may control the pump 152 such that the liquid surface LS changes from the upper side to the lower side of the suction port SP, or may control the pump 152 such that the liquid surface LS changes from the lower side to the upper side of the suction port SP. In the example in FIG. 2, the controller 50 controls the pump 152 such that the liquid surface LS changes from the upper side to the lower side of the suction port SP.

When the liquid surface LS of the liquid coolant CLL passes through the suction port SP of the pump 152, the bubble-like coolant CLB that is floating on the liquid coolant CLL is sucked into the suction port SP. As a result, the bubble-like coolant CLB is reliably sent from the tank 11 to the tank 12.

If the machine tool 100 is equipped with only one tank 11, the liquid coolant CLL will not be supplied to the machining area AR when the liquid surface LS of the liquid coolant CLL becomes lower than the suction port SP. In this case, machining of the workpiece has to be stopped.

On the other hand, if the machine tool 100 is equipped with two tanks 11 and 12, the machine tool 100 can continue to supply the liquid coolant CLL from the tank 12 to the machining area AR even when the liquid surface LS of the liquid coolant CLL becomes lower than the suction port SP. Therefore, the machine tool 100 can collect the bubble-like coolant CLB in the tank 12 while continuing to supply coolant to the machining area AR.

### C. Configuration of Chip Conveyor 150

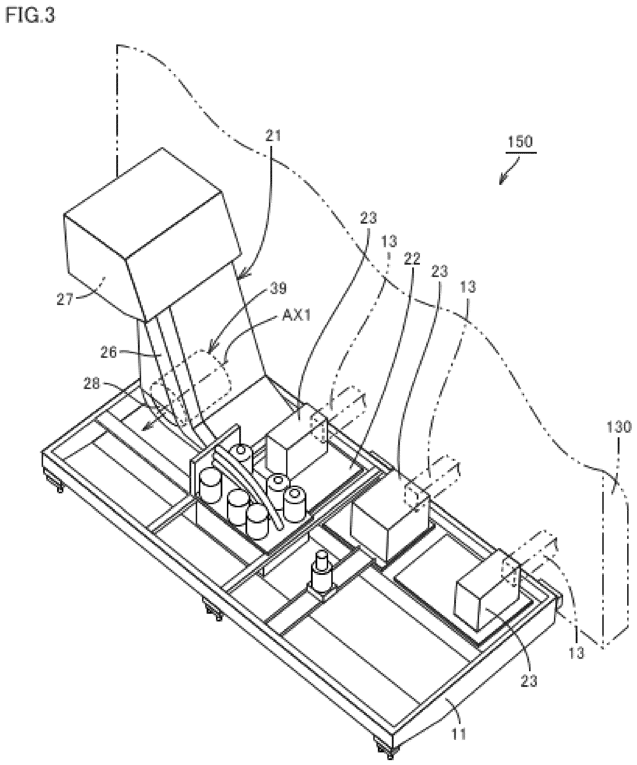

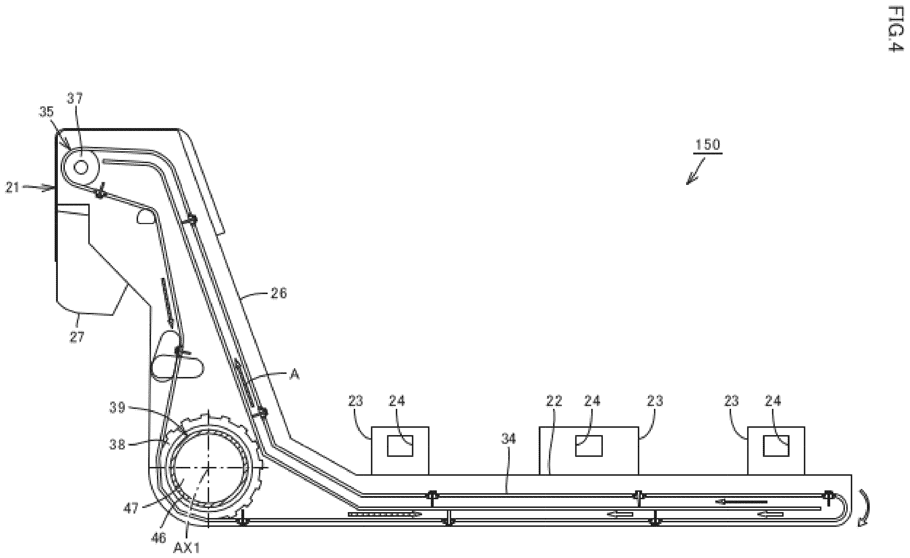

Next, the chip conveyor 150 shown in FIG. 1 above will be described with reference to FIGS. 3 and 4. FIG. 3 is a diagram showing an appearance of the chip conveyor 150. FIG. 4 is a diagram showing a cross section of the chip conveyor 150.

The chip conveyor 150 is provided, for example, next to the cover body 130 that defines the machining area. The chip conveyor 150 receives workpiece chips and coolant discharged from the machining area.

The chip conveyor 150 has the above-described tank 11. The tank 11 is configured to be able to store coolant. The chip conveyor 150 conveys workpiece chips contained in the coolant to a chip bucket (not shown) and discharges clean coolant into the tank 11 by filtering the coolant.

The chip conveyor 150 further has a cover body 21. The cover body 21 forms the appearance of the chip conveyor 150. The cover body 21 is in the shape of a casing that has a space inside.

The cover body 21 has, as its constitutional components, a horizontal portion 22, chip receiving portions 23, a standing portion 26, and the discharge port 27.

The horizontal portion 22 is placed inside the tank 11. The horizontal portion 22 has the appearance of a plate extending in the horizontal direction. The standing portion 26 stands up from one end of the horizontal portion 22 in the longitudinal direction and extends obliquely upward.

The chip receiving portions 23 are provided on the horizontal portion 22. The chip receiving portions 23 are constituted by casings that are provided on the top surface of the horizontal portion 22. The chip receiving portions 23 are respectively provided with connection ports 24. The connection ports 24 are constituted by through holes that are formed through the chip receiving portions 23. Chip conveying devices 13 are respectively connected to the chip receiving portions 23 through the connection ports 24. The chip conveying devices 13 are constituted by, for example, gutters extending in one direction and spiral conveyors installed in the gutters.

The discharge port 27 is provided at the end of the standing portion 26 that extends obliquely upward from the horizontal portion 22. The discharge port 27 is constituted by an opening in the cover body 21 that opens in a vertical downward direction. A chip bucket (not shown) for collecting chips is installed below the discharge port 27. Workpiece chips discharged from the machining area are received from the chip receiving portions 23 into the cover body 21. The chips are then conveyed inside the cover body 21 by a chip conveying mechanism, which will be described later, and are discharged from the discharge port 27 and collected in the chip bucket.

The chip conveyor 150 further has a chip conveying portion 35. The chip conveying portion 35 is housed in the cover body 21. The chip conveying portion 35 is a device for conveying chips inside the cover body 21.

More specifically, the chip conveying portion 35 has a pair of endless chains 34, a driving sprocket 37, and a driven sprocket 38.

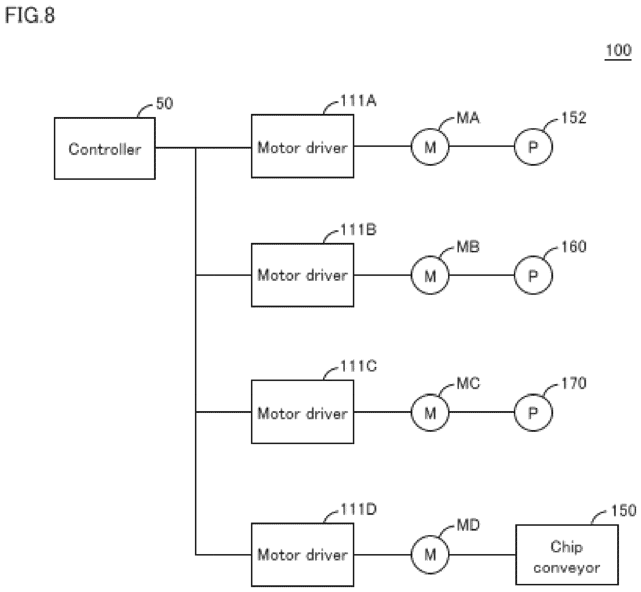

The driving sprocket 37 is provided at the end of the standing portion 26 that extends obliquely upward from the horizontal portion 22. The driving sprocket 37 is located above the discharge port 27. The driving sprocket 37 is rotatably supported about an axis extending in a direction perpendicular to the section of the diagram in FIG. 4 (hereinafter this direction is also referred to as a "width direction of the chip conveyor 150"). The driving sprocket 37 is connected to an output shaft of a motor MD (see FIG. 8), which will be described later. The driving sprocket 37 rotates when power is transmitted from the motor MD.

The driven sprocket 38 is provided in the bent portion between the horizontal portion 22 and the standing portion 26. The driven sprocket 38 is rotatably supported about an axis (an axis AX1) extending in the width direction of the chip conveyor 150.

The pair of endless chains 34 are arranged in parallel to each other with a distance therebetween in the width direction of the chip conveyor 150. The endless chains 34 are wound around the driving sprocket 37 and the driven sprocket 38, and are guided by a plurality of guide members. When the driving sprocket 37 rotates, the endless chains 34 rotate in the direction indicated by the arrow A (hatched arrow) in FIG. 4.

The chip conveyor 150 further has a filtration mechanism 39. The filtration mechanism 39 is provided inside the tank 11 and removes foreign matter such as workpiece chips from the coolant flowing from the machining area into the tank 11. Accordingly, the coolant received from the machining area is filtered and clean coolant is discharged from inside the cover body 21 to the tank 11.

The filtration mechanism 39 has, for example, a drum filter 46. The drum filter 46 is housed in the cover body 21. The drum filter 46 is provided in the bent portion between the horizontal portion 22 and the standing portion 26. The drum filter 46 is configured to remove foreign matter such as chips from coolant flowing in from the outside to the inside. The drum filter 46 has, for example, a cylindrical shape and defines an interior space 47 therein.

The drum filter 46 is arranged such that its central axis extends in the width direction of the chip conveyor 150. The drum filter 46 is arranged such that its central axis coincides with the axis AX1, which is the center of rotation of the driven sprocket 38. The drum filter 46 is connected to the driven sprocket 38 at both ends in the axial direction of the axis AX1.

Although the foregoing description refers to an example where the filtration mechanism 39 has a drum filter 46, the filtration mechanism 39 is not limited to a drum filter 46. As an example, the filtration mechanism 39 may be constituted by a rectangular filter or a circular filter.

The cover body 21 has a coolant discharge portion 28. The coolant discharge portion 28 is constituted by a through hole that is formed through the cover body 21. The coolant discharge portion 28 is provided to connect the interior space 47 of the drum filter 46 with the exterior space outside the cover body 21. Coolant received through the chip receiving portions 23 into the cover body 21 is filtered by entering the interior space 47 of the drum filter 46. The filtered coolant is discharged through the coolant discharge portion 28 into the tank 11.

### D. Coolant Circulation Mechanism

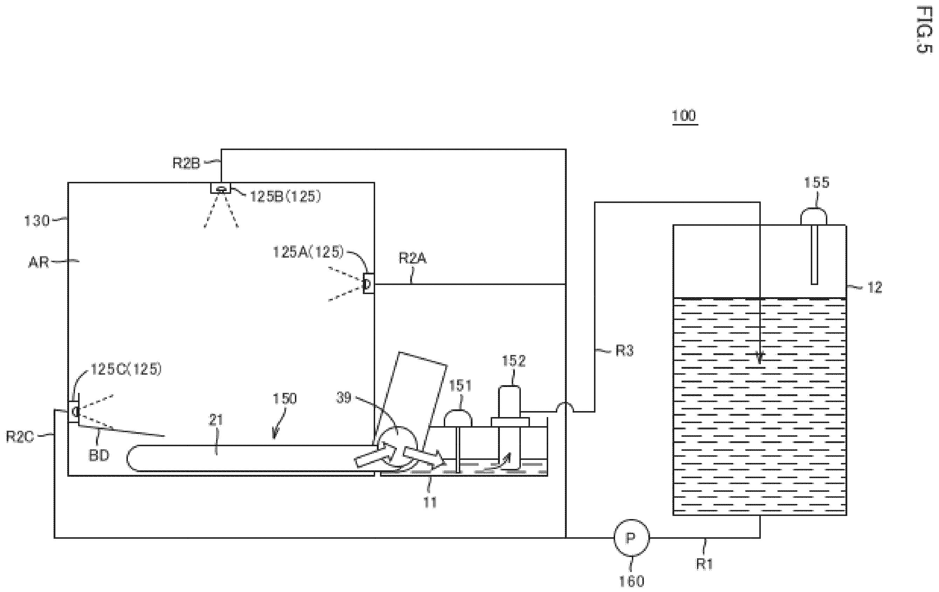

Next, a coolant circulation mechanism will be described with reference to FIG. 5. FIG. 5 is a diagram showing an example of a coolant circulation mechanism.

The machine tool 100 includes a coolant circulation mechanism that is constituted by the tank 11, the tank 12, an ejecting portion 125, the chip conveyor 150, a coolant height sensor 151, the pump 152, a coolant height sensor 155, the pump 160, and flow paths R1, R2A to R2C, and R3.

The ejecting portion 125 is provided inside the machining area AR, and ejects coolant to the workpiece and the machining area AR. Thereby, the ejecting portion 125 discharges chips generated by machining the workpiece to the chip conveyor 150. The ejecting portion 125 is constituted by one or more ejecting mechanisms. In the example in FIG. 5, the ejecting portion 125 is constituted by ejecting mechanisms 125Ato 125C.

The tank 12 stores coolant. The tank 12 is connected to one end of the flow path R1. The other end of the flow path R1 is branched into the flow paths R2A to R2C.

The flow path R2A is connected to the ejecting mechanism 125A. The ejecting mechanism 125A has, for example, a coolant nozzle (not shown) connected to the flow path R2A, and ejects coolant pumped into the flow path R2A from the coolant nozzle toward a spindle. The spindle may be a tool spindle for rotating a tool or a workpiece spindle for rotating a workpiece. When coolant is ejected onto the spindle, workpiece chips adhering to the spindle are discharged to the chip conveyor 150.

The flow path R2B is connected to the ejecting mechanism 125B. The ejecting mechanism 125B is provided on the ceiling of the machining area AR. The ejecting mechanism 125B ejects coolant pumped into the flow path R2B toward the entire machining area AR. Accordingly, workpiece chips in the machining area AR are discharged to the chip conveyor 150.

The flow path R2C is connected to the ejecting mechanism 125C. The ejecting mechanism 125C ejects coolant pumped into the flow path R2C toward the wall of a bed BD. Accordingly, chips accumulated on the bed BD are discharged to the chip conveyor 150.

The pump 160 pumps the coolant stored in the above-described tank 12 into the flow path R1 as it is driven. Accordingly, the pump 160 sends coolant from the tank 12 to the ejecting portion 125.

The flow paths R2A to R2C may be respectively provided with valves. These valves are control valves that control the flow rate of the coolant pumped from the tank 12 to the ejecting mechanisms 125A to 125C. The valves need not necessarily be provided on the flow paths R2A to R2C, and may be integrally provided with the pump 160.

As described above, the chip conveyor 150 has the tank 11 and the filtration mechanism 39. The filtration mechanism 39 is configured to be able to capture foreign matter such as chips contained in coolant. Coolant that has passed through the filtration mechanism 39 is discharged from inside the cover body 21 of the chip conveyor 150 to the tank 11. Accordingly, the tank 11 receives the coolant ejected into the machining area AR.

The coolant height sensor 151 is provided inside the tank 11. Preferably, the coolant height sensor 151 is located downstream of the filtration mechanism 39 in the flow direction of coolant that passes through the filtration mechanism 39. The coolant height sensor 151 may be any type of sensor that can detect a physical quantity correlated with the coolant height of the liquid coolant in the tank 11. As an example, the coolant height sensor 151 may be a float switch, a weight sensor, or any other sensor.

Furthermore, the tank 11 is also provided with the pump 152 for pumping up the coolant. Preferably, the pump 152 is configured to pump up coolant located downstream of the filtration mechanism 39 in the flow direction of coolant that passes through the filtration mechanism 39. The pump 152 pumps up the coolant that has passed through the filtration mechanism 39, and sends the coolant through the flow path R3 to the tank 12. The coolant in the tank 12 is again pumped by the pump 160 into the flow path R1.

The coolant height sensor 155 is provided inside the tank 12. The coolant height sensor 155 is a sensor for detecting the height of the top surface of the bubble-like coolant in the tank 12. The coolant height sensor 155 may be any type of sensor that can detect a physical quantity correlated with the height of the top surface of the bubble-like coolant in the tank 12. As an example, the coolant height sensor 155 may be a distance sensor or any other sensor.

### E. Control Mode of Pump 152

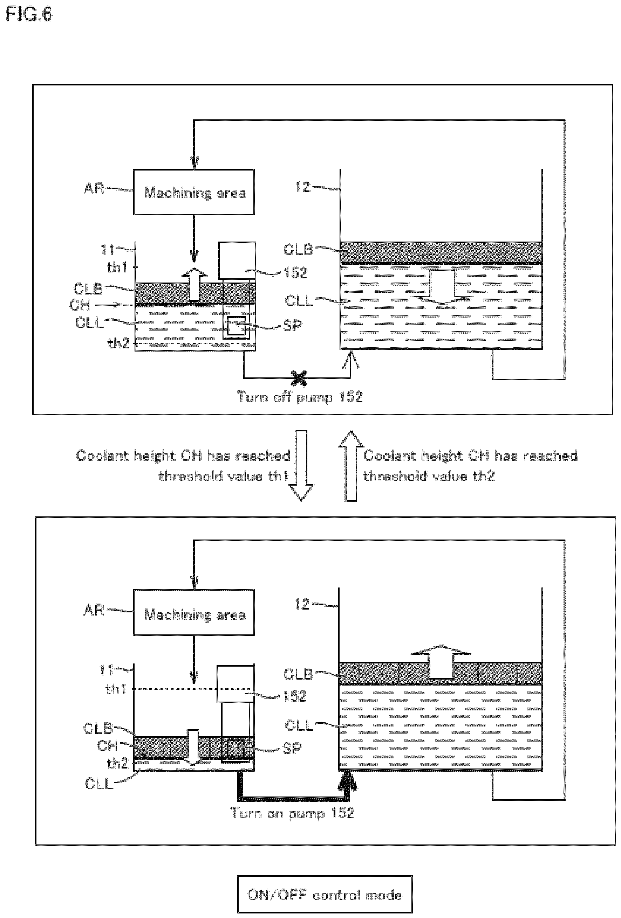

Next, the control mode of the above-described pump 152 will be described with reference to FIG. 6. FIG. 6 is a diagram illustrating an ON/OFF control mode, which is an example of the control mode of the pump 152.

In the ON/OFF control mode, the controller 50 controls the pump 152 such that the coolant height CH in the tank 11 increases or decreases between threshold values th1 and th2.

More specifically, the controller 50 first turns off the pump 152. This stops the discharge of coolant from the tank 11 to the tank 12. On the other hand, the controller 50 continues to drive the above-described pump 160 during machining. Accordingly, coolant in the tank 12 is ejected into the machining area AR inside the machine tool 100, and coolant used in machining a workpiece is stored in the tank 11. As a result, the amount of coolant in the tank 11 increases and the amount of coolant in the tank 12 decreases. At this time, the controller 50 periodically acquires the coolant height CH in the tank 11 from the above-described coolant height sensor 151 and determines whether or not the coolant height CH has exceeded the threshold value th1. The threshold value th1 is set higher than the position of the suction port SP of the pump 152. The threshold value th1 may be set in advance or may be set as appropriate by the user.

If it is determined that the coolant height CH has exceeded the threshold value th1, the controller 50 drives the pump 152. At this time, the controller 50 controls the pump 152 such that the amount of coolant discharged from the tank 11 to the tank 12 is greater than the amount of coolant ejected from the tank 12 to the machining area AR. As an example, the controller 50 drives the pump 152 at the maximum number of rotations within the settable range (e.g., 50 Hz to 60 Hz). This causes the amount of coolant in the tank 11 to decrease and the amount of coolant in the tank 12 to increase.

Next, the controller 50 determines whether or not the coolant height CH in the tank 11 has fallen below the threshold value th2, based on the output value of the above-described coolant height sensor 151. The threshold value th2 is set lower than the position of the suction port SP of the pump 152. The threshold value th2 may be set in advance or may be set as appropriate by the user. If it is determined that the amount of coolant in the tank 11 has fallen below the threshold value th2, the controller 50 stops driving the pump 152.

As described above, in the ON/OFF control mode, the controller 50 controls the pump 152 such that the coolant height CH in the tank 11 increases or decreases between the threshold values th1 and th2. Accordingly, the height of the liquid surface in the tank 11 fluctuates, and oil and the bubble-like coolant CLB that are floating on the liquid surface in the tank 11 are discharged from the suction port SP of the pump 152 into the tank 12.

### F. Float Pump 170

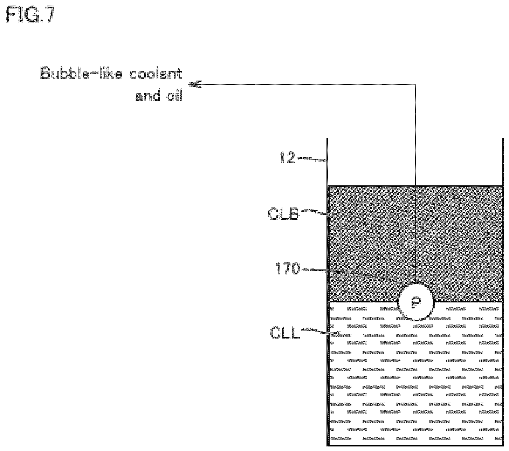

Next, a float pump 170 provided in the tank 12 will be described with reference to FIG. 7. FIG. 7 is a diagram illustrating the float pump 170.

As shown in FIG. 7, the float pump 170 is provided inside the tank 12. The float pump 170 is a float-type pump configured to float on the liquid coolant CLL stored in the tank 12. Since the float pump 170 floats on the liquid surface of the liquid coolant CLL, it can suck oil and the bubble-like coolant CLB that are floating on the liquid coolant CLL.

The sucked oil and bubble-like coolant CLB are discharged through a discharge pipe (not shown) connected to the float pump 170, to the outside of the machine tool 100. Preferably, the sucked oil and bubble-like coolant CLB are discharged to a device that separates foreign matter. The coolant from which foreign matter is separated is reused for machining workpieces.

### G. Drive Mechanisms

Next, various drive mechanisms in the machine tool 100 will be described with reference to FIG. 8. FIG. 8 is a diagram showing a configuration example of drive mechanisms in the machine tool 100.

As shown in FIG. 8, the machine tool 100 includes, as its constitutional components pertaining to the drive mechanisms, the controller 50, motor drivers 111A to 111D, motors MA to MD, the above-described pumps 152 and 160, the above-described float pump 170, and the above-described chip conveyor 150.

As described above, the pump 152 is a device for pumping coolant into the flow path R3 (see FIG. 5). The motor MA is connected to the pump 152. The motor MA may be an AC motor, a stepper motor, a servo motor, or any other type of motor.

The motor MA is driven by the motor driver 111A. The motor driver 111A is constituted by a control circuit, an inverter, and the like. The motor driver 111A receives a control signal input from the controller 50 and outputs an alternating current at a frequency corresponding to the control signal to the motor MA. This changes the number of rotations of the motor MA and controls the flow rate of the coolant pumped into the above-described flow path R3.

As described above, the pump 160 is a device for pumping coolant into the flow path R1 (see FIG. 5). The motor MB is connected to the pump 160. The motor MB may be an AC motor, a stepper motor, a servo motor, or any other type of motor.

The motor MB is driven by the motor driver 111B. The motor driver 111B is constituted by a control circuit, an inverter, and the like. The motor driver 111B receives a control signal input from the controller 50 and outputs an alternating current at a frequency corresponding to the control signal to the motor MB. This changes the number of rotations of the motor MB and controls the flow rate of the coolant pumped into the above-described flow path R1.

As described above, the float pump 170 is a float-type pump configured to float on the liquid coolant CLL stored in the tank 12. The motor MC is connected to the float pump 170. The motor MC may be an AC motor, a stepper motor, a servo motor, or any other type of motor.

The motor MC is driven by the motor driver 111C. The motor driver 111C is constituted by a control circuit, an inverter, and the like. The motor driver 111C receives a control signal input from the controller 50 and outputs an alternating current at a frequency corresponding to the control signal to the motor MC. This changes the number of rotations of the motor MC and controls the flow rate of the coolant sucked up from the tank 12.

The motor MD is connected to the above-described chip conveyor 150 (see FIG. 4). The motor MD may be an AC motor, a stepper motor, a servo motor, or any other type of motor.

The motor MD is driven by the motor driver 111D. The motor driver 111D is constituted by a control circuit, an inverter, and the like. The motor driver 111D receives a control signal input from the controller 50 and outputs an alternating current at a frequency corresponding to the control signal to the motor MD. This changes the number of rotations of the motor MD and controls the rotational speed of the conveyor in the chip conveyor 150.

### H. Controller 50

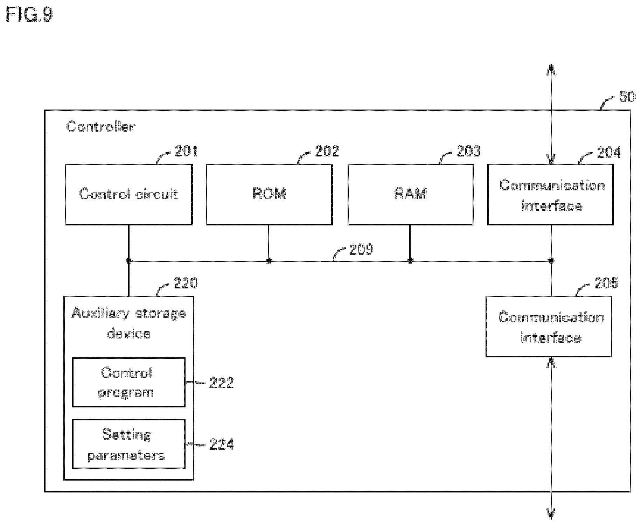

Next, the above-described controller 50 will be described with reference to FIG. 9. FIG. 9 is a diagram showing an example of the hardware configuration of the controller 50.

The controller 50 is a device for controlling the machine tool 100. There is no limitation to the device configuration of the controller 50. The controller 50 may be constituted by a single control unit or a plurality of control units. As an example, the controller 50 includes at least one of a programmable logic controller (PLC) and computer numerical control (CNC).

The controller 50 includes a control circuit 201, a read only memory (ROM) 202, a random access memory (RAM) 203, communication interfaces 204 and 205, and an auxiliary storage device 220. These components are connected to an internal bus 209.

The control circuit 201 is constituted by, for example, at least one integrated circuit. The integrated circuit may be constituted by, for example, at least one CPU, at least one graphics processing unit (GPU), at least one application specific integrated circuit (ASIC), at least one field programmable gate array (FPGA), a combination thereof, or the like.

The control circuit 201 controls the operation of a CPU unit 20 by executing various programs such as a control program 222. The control program 222 specifies commands for controlling various devices in the machine tool 100. The control circuit 201 reads the control program 222 from the auxiliary storage device 220 or the ROM 202 to the RAM 203 based on the fact that a command to execute the control program 222 has been accepted. The RAM 203 functions as a working memory and temporarily stores various types of data necessary for the execution of the control program 222.

The communication interface 204 is an interface for realizing communication using a local area network (LAN) cable, wireless LAN (WLAN), Bluetooth (registered trademark), or the like.

The communication interface 205 is an interface for performing periodic communication with external devices using a field network. The field network may be, for example, EtherCAT (registered trademark), EtherNet/IP (registered trademark), CC-Link (registered trademark), CompoNet (registered trademark), or the like. The controller 50 realizes communication with, for example, the above-described pump 152, the above-described pump 160, and the above-described float pump 170, and the like, via a communication interface 305.

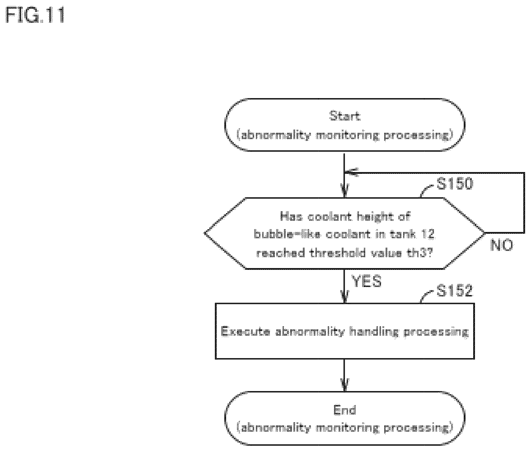

The auxiliary storage device 220 is, for example, a storage medium such as a hard disk or a flash memory. The auxiliary storage device 220 stores various types of information such as the control program 222 and setting parameters 224. The setting parameters 224 define various parameters that are referenced when the control program 222 is executed. As an example, the setting parameters 224 define the above-described threshold values th1 and th2 (see FIG. 6), a threshold value th3 (see FIG. 11), which will be described later, and the like.

The storage location of the control program 222 and the setting parameters 224 is not limited to the auxiliary storage device 220, and they may be stored in a storage area (e.g., a cache memory) of the control circuit 201, the ROM 202, the RAM 203, an external device (e.g., a server), or the like.

The control program 222 may be provided not as a stand-alone program, but incorporated into a part of any program. In this case, various types of processing according to this embodiment are realized in cooperation with any suitable program. Even if the program does not include some of these modules, it does not depart from the gist of the control program 222 according to this embodiment. Furthermore, some or all of the functions provided by the control program 222 may be realized by dedicated hardware. Furthermore, the CPU unit 20 may be configured in the form of a so-called cloud service in which at least one server executes part of the processing of the control program 222.

### I. Flowchart regarding Pump Control Processing

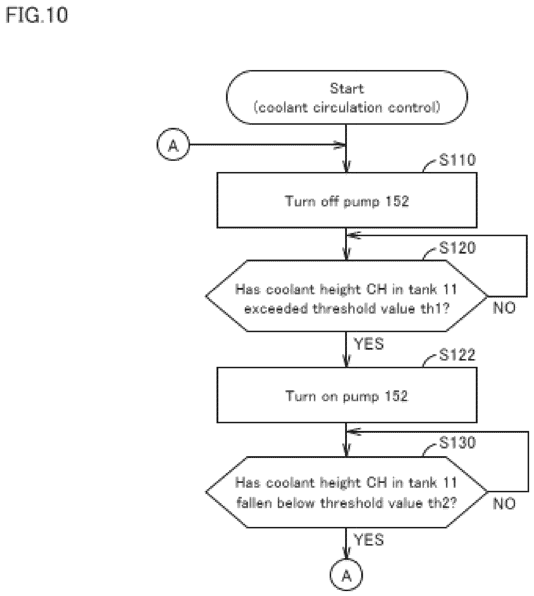

Next, the flow of the ON/OFF control described in FIG. 6 above will be described with reference to FIG. 10. FIG. 10 is a flowchart showing the flow of the ON/OFF control.

The processing shown in FIG. 10 is performed by the controller 50 executing the above-described control program 222. Note that a part or all of the processing shown in FIG. 10 may be executed by a circuit element or another piece of hardware.

In step S110, the controller 50 turns off the above-described pump 152. This stops the discharge of coolant from the tank 11 to the tank 12. On the other hand, the controller 50 continues to drive the above-described pump 160 during machining. As a result, the amount of coolant in the tank 11 increases and the amount of coolant in the tank 12 decreases.

In step S120, the controller 50 determines whether or not the coolant height CH in the tank 11 has exceeded the threshold value th1, based on the output value of the above-described coolant height sensor 151. As described above, the threshold value th1 is set higher than the position of the suction port SP of the pump 152. If it is determined that the coolant height CH in the tank 11 has exceeded the threshold value th1 (YES in step S120), the controller 50 switches control to step S122. Otherwise (NO in step S120), the controller 50 again executes the processing in step S120.

In step S122, the controller 50 turns on the above-described pump 152. Accordingly, coolant in the tank 11 is discharged into the tank 12. On the other hand, the controller 50 continues to drive the above-described pump 160 during machining. At this time, the controller 50 controls the pump 152 such that the amount of coolant discharged from the tank 11 to the tank 12 is greater than the amount of coolant ejected from the tank 12 to the machining area AR. As a result, the amount of coolant in the tank 11 decreases and the amount of coolant in the tank 12 increases.

In step S130, the controller 50 determines whether or not the coolant height CH in the tank 11 has fallen below the threshold value th2, based on the output value of the above-described coolant height sensor 151. As described above, the threshold value th2 is set lower than the position of the suction port SP of the pump 152. If it is determined that the coolant height CH in the tank 11 has fallen below the threshold value th2 (YES in step S130), the controller 50 returns control to step S110. Otherwise (NO in step S130), the controller 50 again executes the processing in step S130.

### J. Flowchart regarding Abnormality Monitoring Processing

As described above, the machine tool 100 collects the bubble-like coolant CLB from the tank 11 to the tank 12. At this time, the machine tool 100 monitors the amount of bubble-like coolant CLB in the tank 12, and if the amount of bubble-like coolant CLB has reached a threshold value, the machine tool 100 executes predetermined abnormality handling processing.

In the description below, the flow of the control regarding the abnormality monitoring processing will be described with reference to FIG. 11. FIG. 11 is a flowchart showing the flow of the abnormality monitoring processing.

The processing shown in FIG. 11 is performed by the controller 50 executing the above-described control program 222. Note that a part or all of the processing shown in FIG. 11 may be executed by a circuit element or another piece of hardware.

In step S150, the controller 50 determines whether or not the height of the top surface of the bubble-like coolant in the tank 12 has reached the predetermined threshold value th3, based on the output value of the above-described coolant height sensor 155. If it is determined that the height of the top surface of the bubble-like coolant in the tank 12 has reached the predetermined threshold value th3 (YES in step S150), the controller 50 switches control to step S 152. Otherwise (NO in step S150), the controller 50 again executes the processing in step S150.

In step S152, the controller 50 executes predetermined abnormality handling processing. As an example, the abnormality handling processing includes notification processing of notifying the operator that the amount of bubble-like coolant in the tank 12 has exceeded the allowable amount. The notification processing is realized by, for example, displaying a message indicating the occurrence of the abnormality on the above-mentioned display 306. Alternatively, the notification processing is realized by turning on an abnormality lamp (not shown) provided in the machine tool 100.

As another example of the abnormality handling processing, the controller 50 may perform processing of starting driving the above-described float pump 170 (see FIG. 7). This causes the bubble-like coolant accumulated in the tank 12 to be discharged to the outside of the tank 12. The float pump 170 may be driven only during the abnormality handling processing, or it may be driven all the time.

As another example of the abnormality handling processing, the controller 50 may perform processing of stopping the machine tool 100. This can prevent the bubble-like coolant from overflowing from the tank 12 in the machine tool 100.

The disclosed embodiment is an illustrative example in all aspects and should not be considered as restrictive. The scope of the present invention is defined not by the above descriptions but by the claims, and is intended to encompass all modifications within the meanings and scope that are equivalent to the claims.

### LIST OF REFERENCE NUMERALS

- 11: Tank
- 12: Tank
- 13: Chip conveying device
- 20: CPU unit
- 21: Cover body
- 22: Horizontal portion
- 23: Chip receiving portion
- 24: Connection port
- 26: Standing portion
- 27: Discharge port
- 28: Coolant discharge portion
- 34: Endless chain
- 35: Chip conveying portion
- 37: Driving sprocket
- 38: Driven sprocket
- 39: Filtration mechanism
- 46: Drum filter
- 47: Interior space
- 50: Controller
- 100: Machine tool
- 111A: Motor driver
- 111B: Motor driver
- 111C: Motor driver
- 111D: Motor driver
- 125: Ejecting portion
- 125A: Ejecting mechanism
- 125B: Ejecting mechanism
- 125C: Ejecting mechanism
- 130: Cover body
- 150: Chip conveyor
- 151: Coolant height sensor
- 152: Pump
- 155: Coolant height sensor
- 160: Pump
- 170: Float pump
- 201: Control circuit
- 202: ROM
- 203: RAM
- 204: Communication interface
- 205: Communication interface
- 209: Internal bus
- 220: Auxiliary storage device
- 222: Control program
- 224: Setting parameter
- 300: Operation panel
- 305: Communication interface
- 306: Display
- AR: Machining area
- AX1: Axis
- BD: Bed
- CH: Coolant height
- CLB: Bubble-like coolant
- CLL: Liquid coolant
- LS: Liquid surface
- MA: Motor
- MB: Motor
- MC: Motor
- MD: Motor
- R1: Flow path
- R2A: Flow path
- R2B: Flow path
- R2C: Flow path
- R3: Flow path
- SP: Suction port
- th1: Threshold value
- th2: Threshold value
- th3: Threshold value

## Claims

1. A machine tool capable of machining a workpiece, comprising:
a first tank for storing coolant used in machining the workpiece;
a pump for pumping up the coolant stored in the first tank;
a second tank for storing the coolant pumped up by the pump; and
a controller for controlling the pump to send bubbles generated inside the first tank together with the coolant, to the second tank.

2. The machine tool according to claim 1, further comprising a filtration mechanism that is provided inside the first tank and used for removing foreign matter contained in the coolant.

3. The machine tool according to claim 2, wherein the filtration mechanism is a drum filter configured to remove the foreign matter from coolant flowing in from the outside to the inside.

4. The machine tool according to any one of claims 1 to 3, wherein the performing control includes controlling the pump such that a liquid surface of liquid coolant stored in the first tank passes through a suction port of the pump.

5. The machine tool according to any one of claims 1 to 3, further comprising a sensor for detecting a height of a top surface of bubble-like coolant stored in the second tank,
wherein the controller executes predetermined abnormality handling processing based on the fact that the height of the top surface of the bubble-like coolant has reached a predetermined threshold value.

6. The machine tool according to any one of claims 1 to 3, further comprising a float-type pump configured to float on liquid coolant stored in the second tank.

7. A tank capable of storing coolant used in machining a workpiece using a machine tool,
the machine tool including:
a pump for pumping up the coolant stored in the tank; and
another tank for storing the coolant pumped up by the pump,
wherein the pump is controlled to send bubbles generated inside the tank together with the coolant, from the tank to the other tank.

8. A tank for use in a machine tool,
the machine tool including:
another tank for storing coolant used in machining a workpiece; and
a pump for sending the coolant stored in the other tank to the tank,
wherein the pump is controlled to send bubbles generated inside the other tank together with the coolant, to the tank.
